# EUROPEAN PATENT APPLICATION

(11) **EP 4 382 791 A1**
(43) Date of publication of application: **12.06.2024**
(21) Application number: 22864570.1
(22) Date of filing: 30.08.2022
(51) Int. Cl.: F16L 21/04, F16L 21/08

(54) **PRESSING RING, PIPE JOINT, AND METHOD FOR JOINING PIPES**

(30) Priority: 03.09.2021 JP 2021143578; 05.11.2021 JP 2021180706
(71) Applicant: Kubota Corporation, Osaka-shi, Osaka 556-8601 (JP)
(72) Inventor: TANAKA Ryunosuke, Amagasaki-shi, Hyogo 660-0095 (JP); KOMARU Yuito, Amagasaki-shi, Hyogo 660-0095 (JP); ODA Keita, Amagasaki-shi, Hyogo 660-0095 (JP)
(74) Representative: Canzler & Bergmeier Patentanwälte Partnerschaft mbB
(86) International application number: PCT/JP2022/032609
(87) International publication number: WO 2023/032988

(57) **Abstract**

A gland 20 is provided in a pipe joint 1 in which a sealing member 15 is inserted between an outer circumference of a spigot 3 and an inner circumference of a socket 5, the gland 20 is arranged along an outer circumference of the spigot 3 so as to face an opening end surface 21 of the socket 5 from the outer side, and the gland 20 is connected to the socket 5 by a plurality of fasteners 22, 23 to push the sealing member 15 toward a deeper side of the socket 5. The gland 20 has a pressing surface 36 that presses the sealing member 15, a plurality of insertion holes 37 through which the fasteners 22 are inserted, a contact portion 38 that is brought into contact with the opening end surface 21 of the socket 5, and a tapered surface 47 formed on an inner circumference 41. The tapered surface 47 has the diameter expanded from a side closer to the pressing surface 36 to the opposite side farther away therefrom.

## Description

### Technical Field

The present invention relates to a gland used for a pipe joint having a socket and a spigot, a pipe joint having the gland, and a method for joining pipes using the gland.

### Background Art

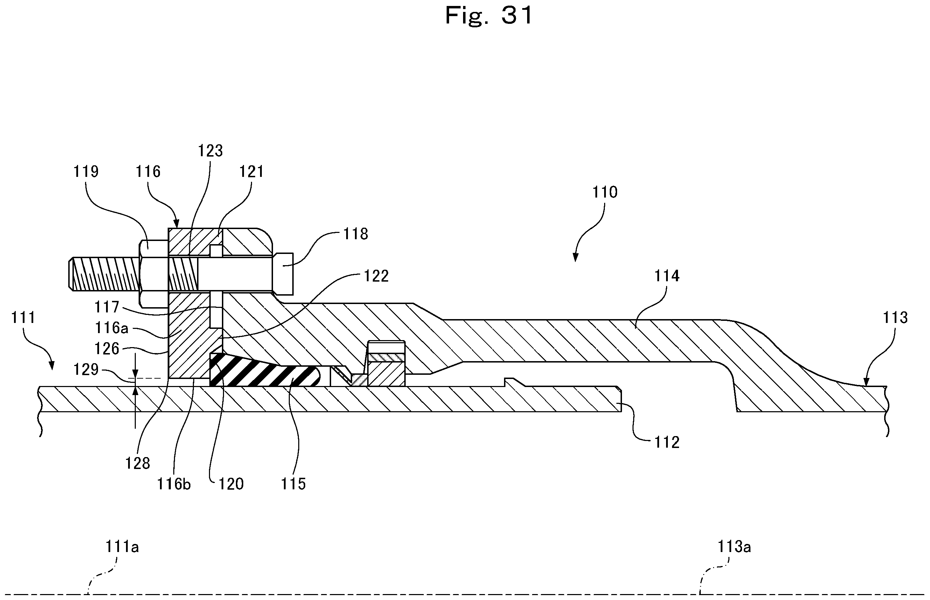

Conventionally, in this type of pipe joint, for example as shown in FIG. 31, a spigot 112 of a first pipe 111 is inserted into a socket 114 of a second pipe 113. A rubber sealing member 115 is inserted between the outer circumference of the spigot 112 and the inner circumference of the socket 114. The gland 116 is arranged along an outer circumference of the spigot 112 so as to face the opening end surface 117 of the socket 114 from the outer side. The gland 116 is connected to the socket 114 by a plurality of bolts 118 and nuts 119.

The gland 116 includes an annular body portion 116a, a pressing surface 120 that abuts and presses the sealing member 115, and abutting portions 121, 122 that abut the opening end surface 117 of the socket 114, and a plurality of bolt insertion holes 123 through each of which the bolt 118 is inserted. Tightening the nut 119 to the bolt 118 causes the pressing surface 120 of the gland 116 to push the sealing member 115 between the outer circumference of the spigot 112 and the inner circumference of the socket 114.

The gland 116 and the pipe joint 110 as described above can be referenced to Japanese Patent Laid-Open No. 2021-67282.

### Summary of Invention

### Technical Problem

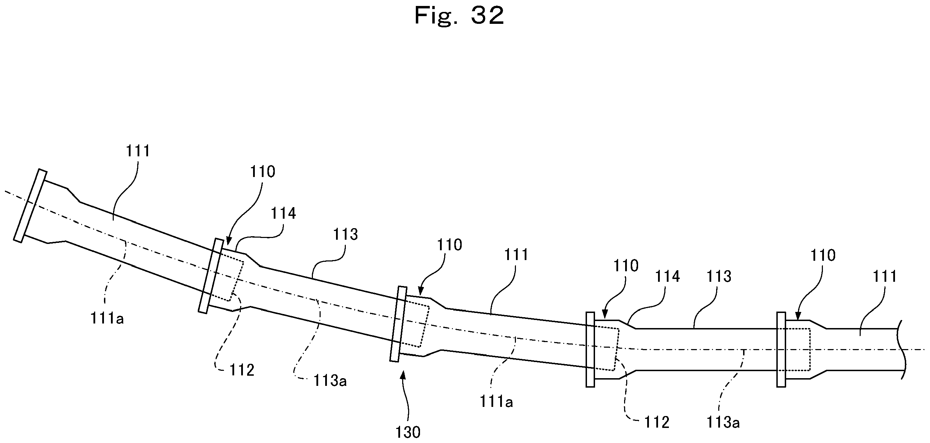

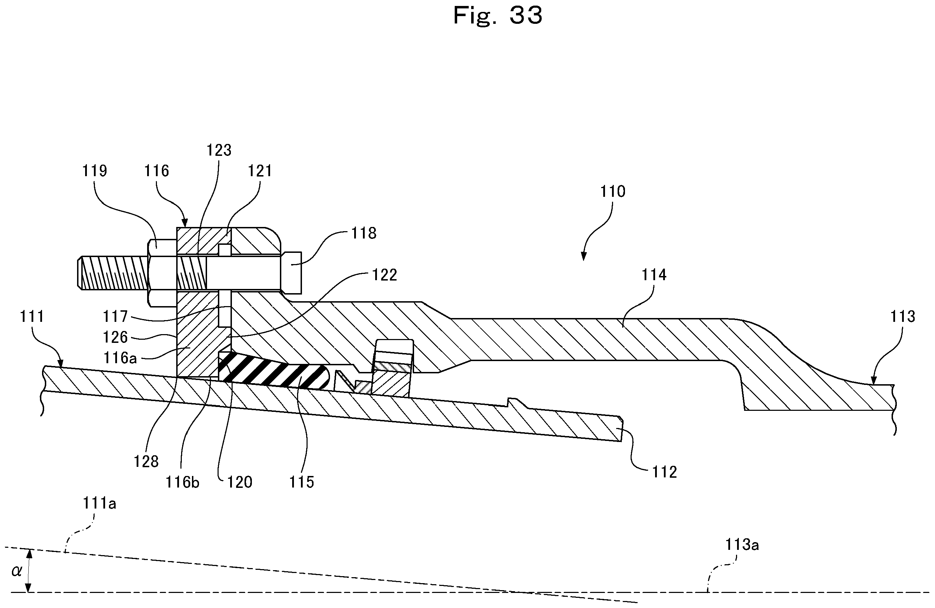

In the conventional form described above, when a curved pipeline 130 is formed by joining a plurality of pipes 111, 113 together as shown in FIG. 32, these pipes 111, 113 are joined together with the pipe axis 111a of the first pipe 111 being inclined with respect to the pipe axis 113a of the second pipe 113 as shown in FIG. 33.

However, as shown in FIG. 33, the gland 116 has a corner 128 where an inner circumference 116b of the gland 116 and a surface 126 opposite the pressing surface 120 intersect. When the outer circumference of the first pipe 111 comes into abutment on the corner 128, it is difficult to further increase the inclination angle α of the pipe axis 111a of the first pipe 111 with respect to the pipe axis 113a of the second pipe 113.

It is possible to increase the inclination angle α by increasing the diameter (inner diameter) of the inner circumference 116b of the gland 116, but in this case, a gap 129 (see FIG. 31) between the inner circumference 116b of the gland 116 and the outer circumference of the first pipe 111 is increased as well. For this reason, the sealing member 115 is more likely to go into the gap 129 from the pressing surface 120 of the gland 116, and there is a risk that the sealing member 115 is not sufficiently inserted between the outer circumference of the spigot 112 and the inner circumference of the socket 114.

It is an object of the invention to provide a gland, a pipe joint, and a method for joining pipes, which enable to increase the inclination angle when joining the pipes in an inclined state, and to sufficiently insert a sealing member between the outer circumference of the spigot and the inner circumference of the socket.

### Solution to Problem

A gland of the invention is provided in a pipe joint. In the pipe joint, a spigot is inserted into a socket, and a sealing member is inserted between an outer circumference of a spigot and an inner circumference of a socket. The gland is arranged along an outer circumference of the spigot so as to face an opening end surface of the socket from the outer side, and is connected to the socket by a plurality of fasteners to push the sealing member toward a deeper side of the socket. The gland includes a pressing surface that presses the sealing member, a plurality of insertion holes in which each fastener is inserted through each insertion hole, a contact portion that is brought into contact with opening end surface of the socket, and a tapered surface formed on an inner circumference of the gland. The tapered surface has a diameter expanded from a side closer to the pressing surface to the opposite side farther away therefrom.

Accordingly, the spigot is inserted into the socket with the pipe axis of the spigot of a first pipe being inclined with respect to the pipe axis of the socket of a second pipe, and each fastener is inserted into each insertion hole of the gland to be tightened. As a result, it is possible to join the first pipe and the second pipe by connecting the gland to the socket and inserting the sealing member between the outer circumference of the spigot and the inner circumference of the socket.

Since a tapered surface is formed on the inner circumference of the gland, an abutting place at which the outer circumference of the first pipe comes into abutment on the inner circumference of the gland will be a place closer to the pressing surface than to a corner between the inner circumference of the gland and the opposite surface of the pressing surface. This will enable to increase the inclination angle of the pipe axis of the first pipe with respect to the pipe axis of the second pipe when the outer circumference of the first pipe comes into abutment on the inner circumference of gland. For this reason, when forming a curved pipeline by joining a plurality of pipes together with the pipes being inclined to each other, there is no need of forming each pipe to be short and therefore it is possible to reduce the number of pipes.

Moreover, since there is no need of increasing the inner diameter of the gland for increasing the inclination angle, the gap between the inner circumference of the gland and the outer circumference of the first pipe will not increase, thus making it possible to suppress the sealing member from entering into the gap from the pressing surface. Thereby, it is possible to sufficiently insert the sealing member between the outer circumference of the spigot and the inner circumference of the socket.

According to the gland of the invention, it is preferable that the gland has an inner circumferential surface formed in the inner circumference, and the inner circumferential surface has a constant inner diameter and is located on a side closer to the pressing surface than to the tapered surface.

Accordingly, when the spigot is inserted into the socket with the pipe axis of the spigot of the first pipe being inclined with respect to the pipe axis of the socket of the second pipe, and the first pipe and the second pipe are joined, the outer circumference of the first pipe will not abut on the inner circumferential edge of the pressing surface of the gland, but will abut on a boundary portion between the inner circumferential surface of the gland and the tapered surface. This will make it possible to prevent the inner circumferential edge of the pressing surface of the gland from being damaged, and to sufficiently insert the sealing member between the outer circumference of the spigot and the inner circumference of the socket with the pressing surface of the gland.

According to the gland of the invention, the contact portion is preferably provided to surround at least the circumference of each insertion hole.

Accordingly, as a result of the contact portion coming into contact with the opening end surface of the socket, the interval from the pressing surface to the opening end surface of the socket is kept at a predetermined interval. Thus, even if the fastener is overly tightened and thereby an excessive fastening force is applied to the gland, it is possible to prevent the gland from being deformed in the circumference of the insertion hole.

According to the gland of the invention, the contact portion is preferably provided in a region from the circumference of the pressing surface to the outer circumferential edge of the gland in the radial direction, excepting the insertion holes.

Accordingly, even if the fastener is excessively tightened and thereby an excessive fastening force is applied to the gland, it is possible to prevent the gland from being deformed in a region from the outer circumferential edge of the pressing surface to the outer circumferential edge of the gland.

According to the gland of the invention, the contact portion has a first contact portion and a second contact portion, and it is preferable that
the first contact portion is a first projecting portion located on the outer side of the insertion hole in the radial direction,
the second contact portion is a second projecting portion located on an inner side of the insertion hole in the radial direction and formed to surround the circumference of the pressing surface, and
a recessed portion to which an end portion of the sealing member is able to fit is formed on an inner side of the second contact portion in the radial direction.

Accordingly, as a result of the first contact portion and the second contact portion of the gland coming into contact with the opening end surface of the socket, the interval from the pressing surface to the opening end surface of the socket is kept at a predetermined interval. Since the end portion of the sealing member is fitted into the recessed portion of the gland when the gland pushes the sealing member between the outer circumference of the spigot and the inner circumference of the socket, the end portion of the sealing member is fixed to the gland without being displaced in the radial direction. As a result, it is possible to reliably insert the sealing member between the outer circumference of the spigot and the inner circumference of the socket.

A pipe joint having the above described gland of the invention is characterized in that
a sealing surface having a diameter gradually reduced toward a deeper side of the socket is formed in the inner circumference of the socket,
an insertion space is formed over the entire circumference between the sealing surface and the outer circumference of the spigot,
the sealing member is inserted into the insertion space,
the sealing member has a bulb portion at an end portion in the insertion direction, the bulb portion being compressed in the pipe radial direction to exhibit a sealing function,
a guiding surface that guides the bulb portion of the sealing member from the opening end surface of the socket to the insertion space is formed in the inner circumference of the socket,
the guiding surface is a tapered surface having a diameter gradually reduced toward a deeper side of the socket and is formed between the opening end surface of the socket and the sealing surface in the pipe axis direction, and
the inclination angle of the guiding surface with respect to the pipe axis is larger than the inclination angle of the sealing surface with respect to the pipe axis.

Accordingly, the bulb portion of the sealing member is guided by the guiding surface from the opening end surface of the socket to the insertion space when the sealing member is pushed into the insertion space by the gland. As a result, even when the fastener is unevenly tightened when fastening the gland to the socket, and thereby the sealing member is elongated and loosened, since the bulb portion of the sealing member is guided by the guiding surface from the opening end surface of the socket to the insertion space, the sealing member can be reliably pushed by the gland into the insertion space.

According to a pipe joint of the invention, it is preferable that
the insertion hole of the gland is located on the outer side of the pressing surface in the radial direction of a gland body,
the contact portion of the gland is provided in a region from the circumference of the pressing surface to the outer circumferential edge of the gland in the radial direction of the gland body excepting the insertion holes,
the pressing surface is formed in a recessed portion surrounded by the contact portion, and
the end portion of the sealing member is fitted into the recessed portion of the gland.

Accordingly, when the gland pushes the sealing member into the insertion space, since the end portion of the sealing member is fitted into the recessed portion of the gland, the sealing member is fixed to the gland without being displaced in the radial direction. Thereby, it is possible to reliably insert the sealing member into the insertion space.

According to a pipe joint of the invention, it is preferable that a gap is formed in which the gap is surrounded by the inner circumferential surface of the contact portion of the gland, the guiding surface of the socket, and the outer circumferential surface of the sealing member.

Accordingly, even if the sealing member is deformed outward in the radial direction when the sealing member is pushed into the insertion space by the gland, the sealing member escapes into the gap so that it is possible to prevent the sealing member from being caught between the contact portion of the gland and the opening end surface of the socket.

According to a pipe joint of the invention, it is preferable that the diameter of the end portion of the guiding surface on the side of an opening end surface of the socket is smaller than the inner diameter of the contact portion of the gland.

Accordingly, when the sealing member is pushed by the gland into the insertion space, the gap formed between the sealing member and the guiding surface is decreased. Thereby, even when the fastener is unevenly tightened when the gland is fastened to the socket, it is possible to prevent curling up of the sealing member due to uneven tightening, thus preventing the sealing member from being caught between the contact portion of the gland and the opening end surface of the socket.

According to a pipe joint of the invention, it is preferable that
the pipe axis of either one of the spigot and the socket is inclined with respect to the pipe axis of the other with the spigot being inserted into the socket,
the sealing member is inserted between the outer circumference of the spigot and the inner circumference of the socket,
the gland is arranged along an outer circumference of the spigot so as to face the opening end surface of the socket from an outer side, and is connected to the socket with a plurality of fasteners,
the pressing surface of the gland abuts on the sealing member, and
the fasteners are inserted through the insertion hole of the gland.

A method for joining pipes by using the above described gland of the invention is characterized by
inserting the spigot into the socket with one pipe axis of either one of the spigot and the socket being inclined with respect to the other pipe axis, and
connecting the gland to the socket and inserting the sealing member between the outer circumference of the spigot and the inner circumference of the socket by inserting and tightening the fastener into the insertion hole of the gland.

According to the joining method, since the spigot is inserted into the socket with one pipe axis of either one of the spigot and the socket being inclined with respect to the other pipe axis, before the sealing member is inserted between the outer circumference of the spigot and the inner circumference of the socket, the force required to incline the spigot with respect to the socket is reduced.

Not as the method for joining pipes as described above, but as another joining method, for example, first, the spigot is inserted into the socket with the pipe axis of either one of the spigot and the socket and the pipe axis of the other being kept in a straight line without being inclined. Next, the sealing member is inserted between the outer circumference of the spigot and the inner circumference of the socket. Thereafter, it is also possible to incline the pipe axis of either one of the spigot and the socket with respect to the pipe axis of the other. However, in such an alternative joining method, since either one of the spigot and the socket is inclined with respect to the other by resisting the sealing member after the sealing member is inserted between the outer circumference of the spigot and the inner circumference of the socket, disadvantageously large force is required when inclining either one of the spigot and the socket with respect to the other.

### Advantageous Effects of Invention

As described so far, according to the invention, it is possible to increase the inclination angle when joining pipes inclined with respect to each other, and also to sufficiently insert the sealing member between the outer circumference of the spigot and the inner circumference of the socket.

### Brief Description of Drawings

[FIG. 1] FIG. 1 is a sectional view of a pipe joint in a first embodiment of the invention.
[FIG. 2] FIG. 2 is a partially enlarged sectional view of the pipe joint.
[FIG. 3] FIG. 3 is a partially enlarged sectional view of the pipe joint, showing a state immediately before a sealing member is inserted between an inner circumference of a spigot and an outer circumference of a socket.
[FIG. 4] FIG. 4 is a partially enlarged sectional view of the socket of the pipe joint.
[FIG. 5] FIG. 5 is a front view of a gland of the pipe joint.
[FIG. 6] FIG. 6 is a rear view of the gland of the pipe joint.
[FIG. 7] FIG. 7 is an X-X sectional view in FIG. 5.
[FIG. 8] FIG. 8 is a Y-Y sectional view in FIG. 5.
[FIG. 9] FIG. 9 is a sectional view to show a method for joining pipes of the pipe joint, showing a way a sealing member is pushed between the inner circumference of the socket and the outer circumference of the spigot by the gland.
[FIG. 10] FIG. 10 is a sectional view showing a way the sealing member of the pipe joint is deformed outward thereby escaping into a gap.
[FIG. 11] FIG. 11 is a sectional view to show a method for joining pipes of the pipe joint, showing a way the sealing member is pushed into a space between the inner circumference of the socket and the outer circumference of the spigot by the gland.
[FIG. 12] FIG. 12 is a sectional view to show a method for joining pipes of the pipe joint, showing a way the sealing member is pushed into the space between the inner circumference of the socket and the outer circumference of the spigot by the gland.
[FIG. 13] FIG. 13 is a sectional view to show a reference example for the first embodiment of the invention, showing a way the sealing member is pushed into a space between an inner circumference of a socket and an outer circumference of a spigot by a gland.
[FIG. 14] FIG. 14 is a sectional view to show the reference example, showing a way the sealing member is pushed into the space between the inner circumference of the socket and the outer circumference of the spigot by the gland.
[FIG. 15] FIG. 15 is a sectional view of a pipe joint in a second embodiment of the invention.
[FIG. 16] FIG. 16 is a partially enlarged front view of a gland of the pipe joint.
[FIG. 17] FIG. 17 is a partially enlarged front view of a gland of a pipe joint in a third embodiment of the invention.
[FIG. 18] FIG. 18 is a sectional view of a pipe joint in a fourth embodiment of the invention.
[FIG. 19] FIG. 19 is a front view of a socket of the pipe joint.
[FIG. 20] FIG. 20 is a front view of a gland of the pipe joint.
[FIG. 21] FIG. 21 is a perspective view of the gland of the pipe joint.
[FIG. 22] FIG. 22 is an X-X sectional view in FIG. 20.
[FIG. 23] FIG. 23 is a Y-Y sectional view in FIG. 20.
[FIG. 24] FIG. 24 is a sectional view of a pipe joint in a fifth embodiment of the invention.
[FIG. 25] FIG. 25 is a front view of a gland of the pipe joint.
[FIG. 26] FIG. 26 is a rear view of the gland of the pipe joint.
[FIG. 27] FIG. 27 is a Z-Z sectional view in FIG. 25.
[FIG. 28] FIG. 28 is a perspective view of the front side of the gland of the pipe joint.
[FIG. 29] FIG. 29 is a perspective view of the rear side of the gland of the pipe joint.
[FIG. 30] FIG. 30 is a schematic diagram to show a way the pipe joining work is performed within a groove formed in the ground.
[FIG. 31] FIG. 31 is a sectional view of a conventional pipe joint, showing a way pipes are joined in a straight line.
[FIG. 32] FIG. 32 is a diagram of a curved pipeline which is formed by joining a plurality of pipes.
[FIG. 33] FIG. 33 is a sectional view of the pipe joint, showing a state of pipes being joined in an inclined state.

### Description of Embodiments

Hereafter, embodiments in the invention will be described with reference to the drawings.

### (First Embodiment)

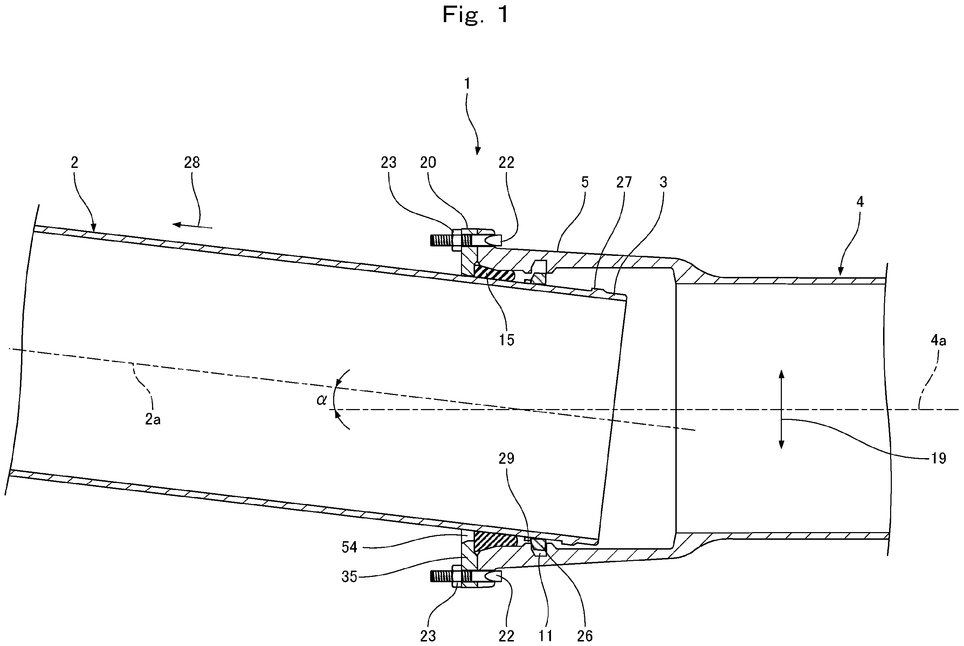

In a first embodiment, as shown in FIGS. 1 to 3, a pipe joint 1 has a spigot 3 formed in a first pipe 2, and a socket 5 formed in a second pipe 4, in which the spigot 3 is inserted into the socket 5.

A tapered sealing surface 8 having a diameter gradually reduced toward a deeper side of the socket 5, a protruding portion 10 of the socket 5, and an accommodating groove 11 for accommodating a lock ling 26 are formed in the inner circumference of the socket 5. An insertion space 14 for inserting an annular sealing member 15 is formed over the entire circumference between the sealing surface 8 and the outer circumference of the spigot 3. The sealing member 15 that seals between the inner circumference of the socket 5 and the outer circumference of the spigot 3 is inserted into the insertion space 14. The sealing member 15, which is a ring made of rubber, has a bulb portion 16 provided at one end portion in an insertion direction 18, and a base portion 17 integrally provided with the bulb portion 16.

The bulb portion 16 has a circular section. The base portion 17 has a trapezoidal section. With the sealing member 15 being inserted into the insertion space 14, the bulb portion 16 is compressed in a radial direction 19 to exhibit a sealing function.

A plurality of bolt holes 25 through each of which a T-head bolt 22 is inserted are provided in the socket 5.

The accommodating groove 11 is formed on a deeper side of the socket 5 with respect to the insertion space 14 for the sealing member 15. The lock ring 26 is accommodated in the accommodating groove 11. The lock ring 26 is a ring having a single-split structure in which one place in the circumferential direction is cut. The lock ring 26 has elasticity so that its diameter is expanded by enlarging the width of the cut portion with a diameter expander (not shown), and the diameter is reduced to return to an original diameter by removing the diameter expander from the cut portion.

The spigot 3 penetrates through the sealing member 15, the lock ring 26, and a backup ring 29. A protruding portion 27 of the spigot 3 is formed over the entire circumference in the outer circumference of a tip end portion of the spigot 3. The protruding portion 27 is engageable with the lock ring 26 from the deeper side of the socket 5 in a departure direction 28 of the first pipe 2. Thereby, in the event of an earthquake or the like, the spigot 3 is prevented from departing from the socket 5.

The protruding portion 10 of the socket 5 protrudes inwardly in the radial direction 19 and is formed over the entire circumference between the insertion space 14 and the accommodating groove 11. The backup ring 29 is externally fitted to the spigot 3 and is disposed between the inner circumference of the protruding portion 10 of the socket 5 and the outer circumference of the spigot 3, to be adjacent to the lock ring 26. The backup ring 29, which is a ring having a single-split structure in which one place in the circumferential direction is cut, is manufactured of a material such as a resin having elasticity.

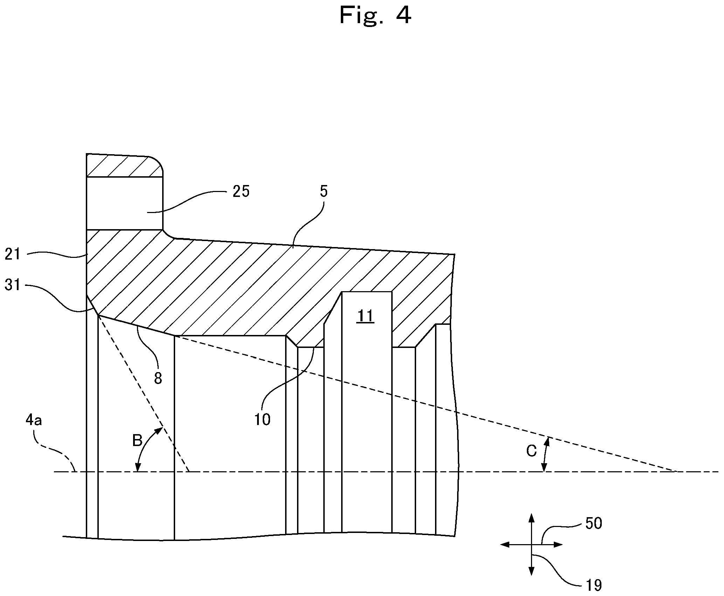

A guiding surface 31 that guides the bulb portion 16 of the sealing member 15 from the opening end surface 21 of the socket 5 to the insertion space 14 is formed in the inner circumference of the socket 5. The guiding surface 31 is a tapered surface having a diameter gradually reduced toward the deeper side of the socket 5 and is formed over the entire circumference between the opening end surface 21 of the socket 5 and the sealing surface 8 in a pipe axis direction 50. As shown in FIG. 4, an inclination angle B of the guiding surface 31 with respect to a pipe axis 4a of the second pipe 4 is larger than an inclination angle C of the sealing surface 8 with respect to the pipe axis 4a.

The gland 20 which pushes the sealing member 15 from the opening end surface 21 of the socket 5 to the deeper side of the socket 5 is arranged along an outer circumference of the spigot 3 so as to face the opening end surface 21 of the socket 5 from the outer side of the socket 5. The gland 20 is connected to the socket 5 via a plurality of T-head bolts 22 (an example of fasteners) and nuts 23 (an example of fasteners) which are disposed in the circumferential direction of the gland 20.

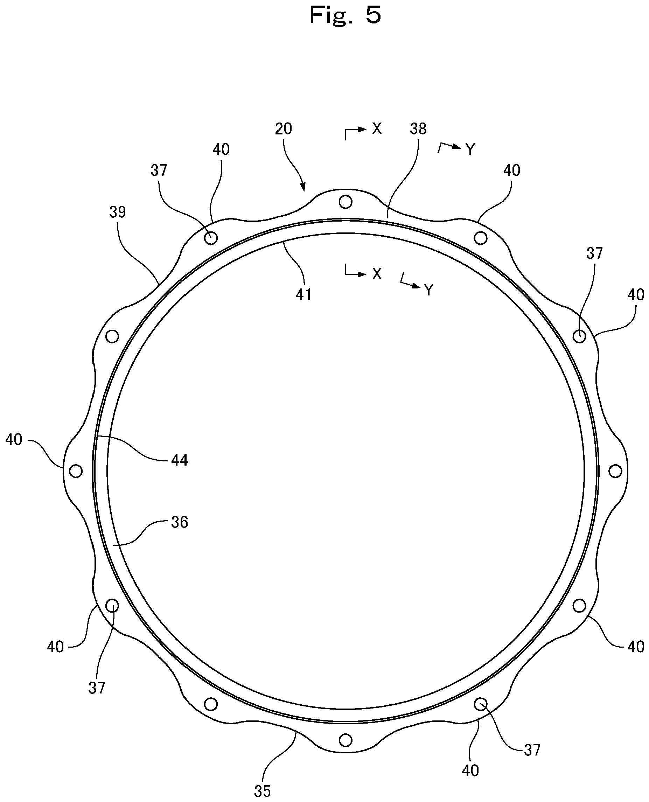

As shown in FIGS. 5 to 8, the gland 20 includes an annular body portion 35, a pressing surface 36 that presses the sealing member 15, a plurality of bolt insertion holes 37 through each of which the T-head bolt 22 is inserted (an example of an insertion hole), and a contact portion 38 that comes into contact with the opening end surface 21 of the socket 5. Further, the gland 20 has a plurality of protruding portions 40 that protrude radially outward, in the outer circumferential portion. The pressing surface 36 is formed in an annular shape along an inner circumference 41 of the gland 20.

Each bolt insertion hole 37 is located between the pressing surface 36 and an outer circumferential edge 39 of the gland 20 in the radial direction 19 of the gland 20. The protruding portion 40 is disposed to correspond to the bolt insertion hole 37.

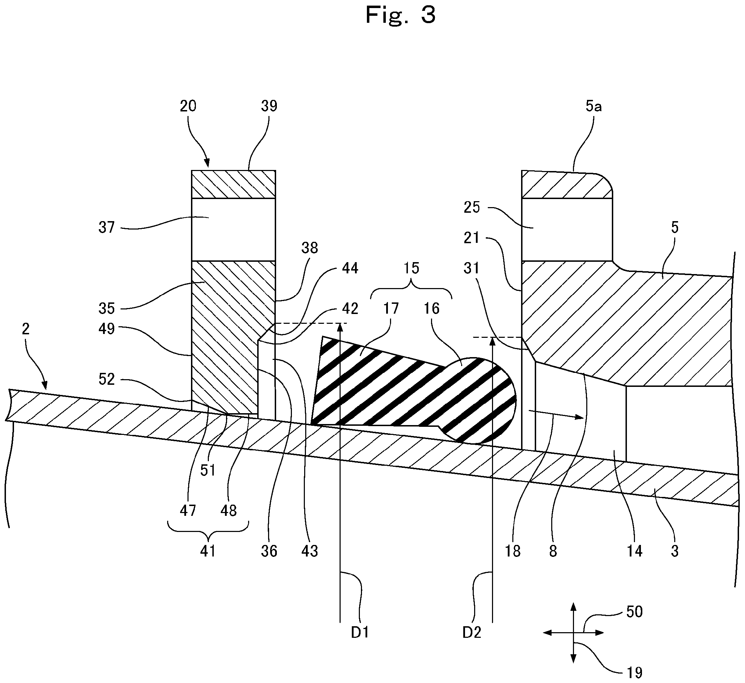

The contact portion 38 is provided in the entire region, excepting the bolt insertion holes 37, from the circumference of the pressing surface 36 to the outer circumferential edge 39 of the gland 20 in the radial direction 19 of the gland 20. The circumference of the pressing surface 36 is a maximum diameter portion of an inner circumferential surface 44 of the contact portion 38 to be described below. The pressing surface 36 is formed in a recessed portion 43 surrounded by the contact portion 38 and is depressed from the surface of the contact portion 38 in a thickness direction 55 of the gland 20. The inner circumferential surface 44 of the contact portion 38 is a tapered surface having a diameter gradually expanded in the insertion direction 18 (see FIG. 3). The contact portion 38 and the recessed portion 43 are formed on one side of the gland 20 facing the opening end surface 21 of the socket 5.

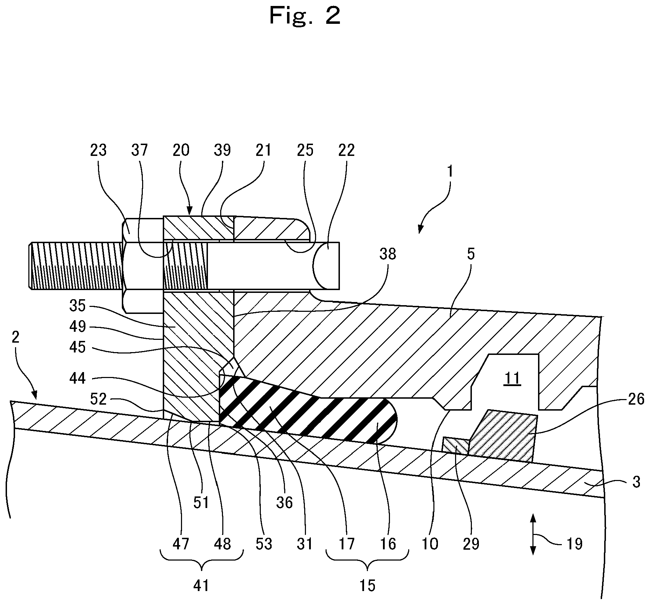

As shown in FIG. 2, the base portion 17 (end portion) of the sealing member 15 is fitted into the recessed portion 43 of the gland 20. A gap 45, which is surrounded by the inner circumferential surface 44 of the contact portion 38 of the gland 20, the guiding surface 31 of the socket 5, and an outer circumferential surface of the base portion 17 of the sealing member 15, is formed over the entire circumference.

As shown in FIG. 3, a diameter D2 of the guiding surface 31 in the opening end surface 21 of the socket 5 is smaller than an inner diameter D1 of the contact portion 38 of the gland 20.

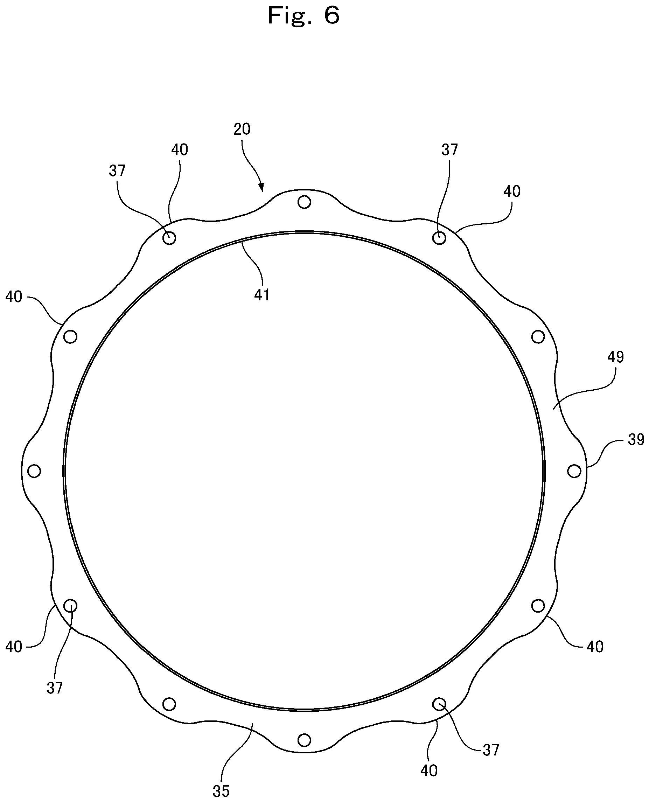

As shown in FIGS. 6 to 8, a tapered surface 47 and an inner circumferential surface 48 are each formed over the entire circumference in the inner circumference 41 of the gland 20. The tapered surface 47 has a diameter gradually expanded from a side closer to the pressing surface 36 to the opposite side farther away therefrom, thus reaching a surface 49 opposite the pressing surface 36.

The inner circumferential surface 48 is formed to have a constant inner diameter d, to be parallel to the pipe axis 4a of the second pipe 4, and to have a predetermined width W in the pipe axis direction 50. The inner circumferential surface 48 is positioned on a side closer to the pressing surface 36 than to the tapered surface 47, reaching the pressing surface 36.

Hereafter, a method for joining the pipes 2, 4 by using the gland 20 will be described.

First, the gland 20, the sealing member 15, and the backup ring 29 are arranged along the outer circumference of the spigot 3 of the first pipe 2, a lock ring 26 is attached to the lock-ring accommodating groove 11 of the socket 5 of the second pipe 4, and the diameter of the lock ring 26 is expanded by using the diameter expander (not shown).

Thereafter, the spigot 3 is inserted into the socket 5 with the pipe axis 2a of the spigot 3 being inclined with respect to the pipe axis 4a of the socket 5. In this regard, since the lock ring 26 has been expanded in diameter, the protruding portion 27 of the spigot 3 passes through the inner circumference of the lock ring 26 toward the deeper side of the socket 5.

Thereafter, as a result of removing the diameter expander (not shown), the lock ring 26 is reduced in diameter, thereby clinging to the outer circumference of the spigot 3.

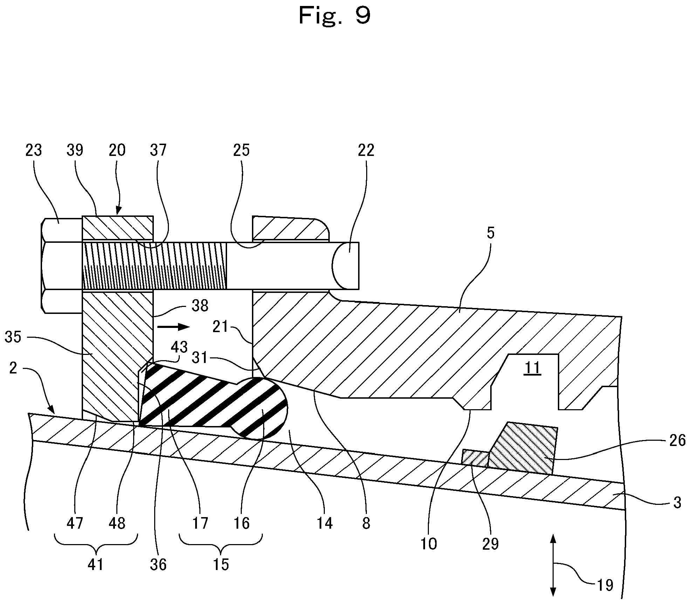

Thereafter, as shown in FIG. 9, the backup ring 29 is moved in the pipe axis direction 50 to be inserted into the socket 5 to be adjacent to the lock ring 26. Then, the sealing member 15 is moved in the pipe axis direction 50 to be positioned in front of the opening end surface 21 of the socket 5.

Thereafter, the T-head bolt 22 is inserted through the bolt hole 25 of the socket 5 and the bolt insertion hole 37 of the gland 20. Then, the nut 23 is screwed to the T-head bolt 22 and the nut 23 is tightened until the contact portion 38 of the gland 20 comes into abutment on the opening end surface 21 of the socket 5.

As a result, as shown in FIGS. 1 and 2, the gland 20 is connected to the socket 5, and the pressing surface 36 of the gland 20 presses the sealing member 15 to insert it into the insertion space 14, thereby joining the first pipe 2 and the second pipe 4 with the pipe axis 2a of the spigot 3 being inclined with respect to the pipe axis 4a of the socket 5.

The actions and effects related to the configuration of the above described pipe joint 1 and the method for joining the pipes 2 and 4 will be described below.

As shown in FIGS. 1 to 3, 7, and 8, since the tapered surface 47 and the inner circumferential surface 48 are formed in the inner circumference 41 of the gland 20, the outer circumference of the first pipe 2 comes into abutment on a boundary portion 51 between the tapered surface 47 and the inner circumferential surface 48, when the outer circumference of the first pipe 2 comes into abutment on the inner circumference 41 of the gland 20. This boundary portion 51 is located closer to the pressing surface 36 than to a corner 52 between the inner circumference 41 of the gland 20 and the surface 49 opposite the pressing surface 36. For this reason, it is possible to increase the inclination angle α (see FIG. 1) of the pipe axis 2a of the first pipe 2 with respect to the pipe axis 4a of the second pipe 4 when the outer circumference of the first pipe 2 comes into abutment on the inner circumference 41 of the gland 20. Thereby, when a plurality of pipes are inclined and joined to form a curved pipeline (see FIG. 32), there is no need of using a large number of short pipes so that it is possible to reduce the number of pipes.

Since the inclination angle α can be increased as described above, even when the pipeline is bent due to an earthquake or the like, the first pipe 2 and the second pipe 4 can be bent with a large inclination angle α. Thereby, it is possible to decrease the load applied to the gland 20.

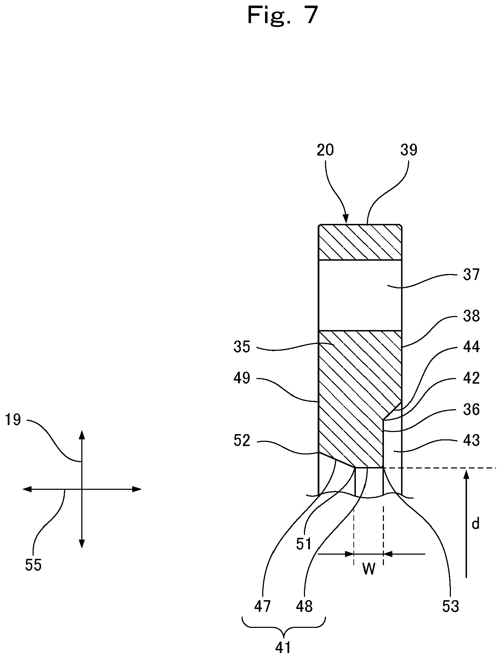

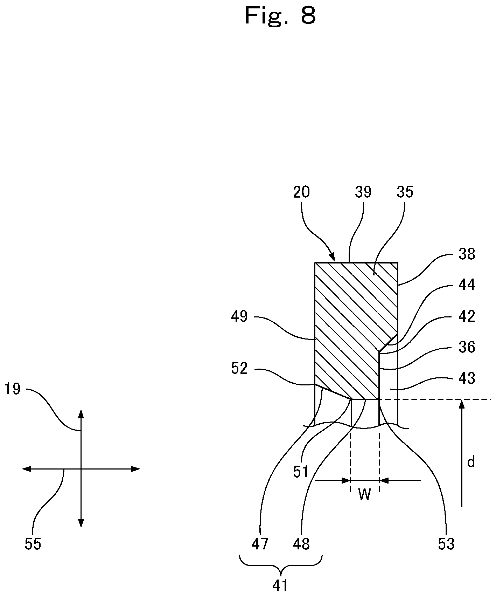

Since the outer circumference of the first pipe 2 will not abut on the inner circumferential edge 53 (see FIGS. 7 and 8) of the pressing surface 36, but abut on the above described boundary portion 51 as shown in FIG. 2, it is possible to prevent the inner circumferential edge 53 of the pressing surface 36 being damaged. Thereby, it is possible to sufficiently insert the sealing member 15 into the insertion space 14 by the pressing surface 36 of the gland 20.

There is no need of increasing the inner diameter d of the gland 20 (that is, the inner diameter d of the inner circumferential surface 48) in order to increase the inclination angle α. Thereby, it is possible to suppress the sealing member 15 from entering into the gap 54 from the pressing surface 36 of the gland 20 without enlarging the gap 54 (see FIG. 1) between the inner circumferential surface 48 of the inner circumference 41 of the gland 20 and the outer circumference of the first pipe 2. Thereby, it is possible to sufficiently insert the sealing member 15 into the insertion space 14.

As shown in FIG. 2, as a result of the contact portion 38 of the gland 20 coming into contact with the opening end surface 21 of the socket 5, the interval from the pressing surface 36 of the gland 20 to the opening end surface 21 of the socket 5 is kept at a predetermined interval.

In this regard, even if the T-head bolt 22 and the nut 23 are overly tightened and an excessive tightening force is applied on the gland 20, it is possible to prevent the gland 20 from being deformed over the entire region from the outer circumferential edge 42 of the pressing surface 36 to the outer circumferential edge 39 of the gland 20.

As shown in FIG. 9, when the sealing member 15 is pushed into the insertion space 14 by the gland 20, since the end portion of the sealing member 15 is fitted into the recessed portion 43 of the gland 20, it is fixed to the gland 20 without being displaced in the radial direction 19. Thereby, it is possible to reliably insert the sealing member 15 into the insertion space 14.

When the sealing member 15 is pushed into the insertion space 14 with the gland 20, the bulb portion 16 of the sealing member 15 is guided from the opening end surface 21 of the socket 5 to the insertion space 14 by the guiding surface 31.

When the T-head bolt 22 and the nut 23 are unevenly tightened sequentially from those in an upper level to those in a lower level upon connecting the gland 20 to the socket 5, even if the sealing member 15 is elongated to be loosened, since the bulb portion 16 is guided by the guiding surface 31 from the opening end surface 21 of the socket 5 to the insertion space 14, it is possible to reliably push the sealing member 15 into the insertion space 14 by the gland 20.

Thereby, there is no need of tightening all the T-head bolts 22 and the nuts 23 such that the tightening torque is uniform, thereby the management of the tightening torque of the T-head bolt 22 and the nut 23 becomes unnecessary, so that it is possible to reduce the time required for the tightening work of the T-head bolt 22 and the nut 23.

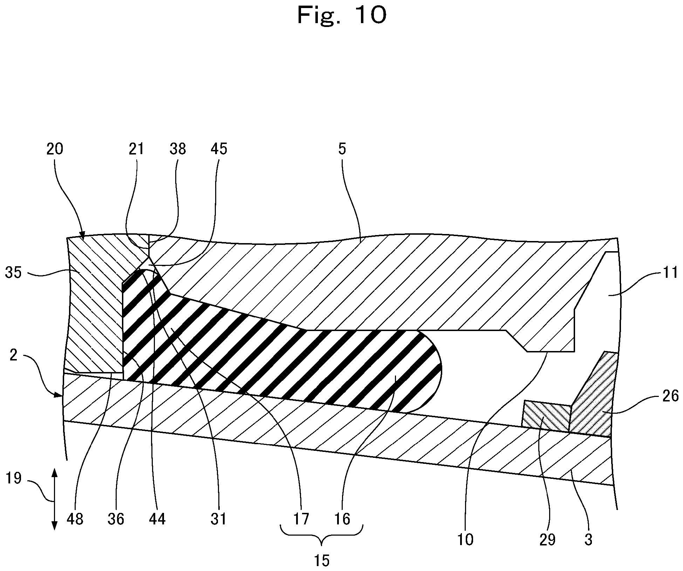

When the sealing member 15 is pushed into the insertion space 14 by the gland 20, as shown in FIG. 10, even if the sealing member 15 is deformed outwardly in the radial direction 19, the sealing member 15 can escape into the gap 45. Thereby, it is possible to prevent the sealing member 15 from being caught between the contact portion 38 of the gland 20 and the opening end surface 21 of the socket 5.

According to the method of joining pipes as described above, as shown in FIG. 9, the spigot 3 is inserted into the socket 5 with the pipe axis 2a of the first pipe 2 being inclined with respect to the pipe axis 4a of the second pipe 4 before the sealing member 15 is inserted into the insertion space 14. For this reason, it takes a small amount of force to incline the spigot 3 with respect to the socket 5.

Instead of the method for joining pipes as described above, another joining method as described below may also be performed. That is, first, the spigot 3 is inserted into the socket 5 with the pipe axis 2a of the first pipe 2 being kept in a straight line with the pipe axis 4a of the second pipe 4 without being inclined with respect to each other. Then, the sealing member 15 is inserted into the insertion space 14. Thereafter, it is also possible to arrange such that the pipe axis 2a of the first pipe 2 is inclined with respect to the pipe axis 4a of the second pipe 4. However, in such an alternative joining method, since the spigot 3 (first pipe 2) is inclined with respect to the socket 5 (second pipe 4) resisting the sealing member 15, after inserting the sealing member 15 into the insertion space 14, disadvantageously large force is required when inclining the spigot 3.

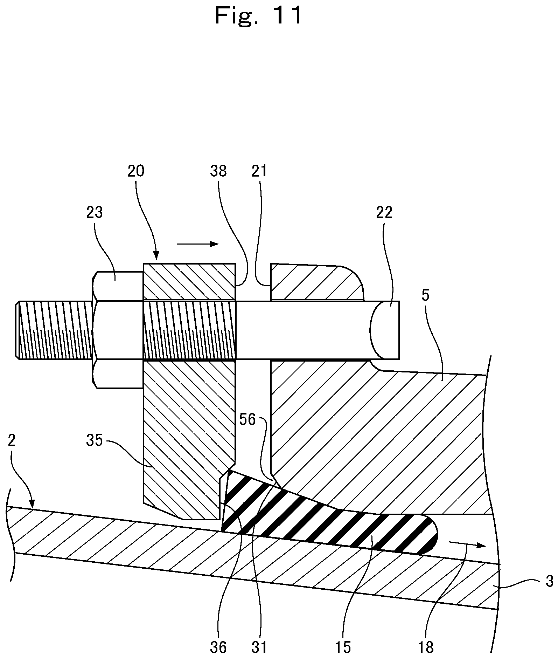

As shown in FIG. 3, since the diameter D2 of the end portion of the guiding surface 31 in the opening end surface 21 of the socket 5 is smaller than the inner diameter D1 of the contact portion 38, as shown in FIG. 11, a gap 56 which is formed between the sealing member 15 and the guiding surface 31 when the sealing member 15 is pushed into the insertion space 14 by the gland 20 becomes small.

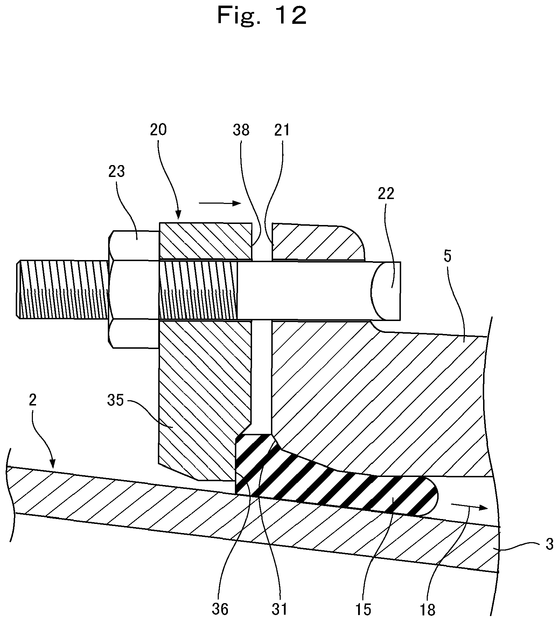

As a result of this, when the T-head bolt 22 and the nut 23 are unevenly tightened upon tightening the gland 20 to the socket 5, as shown in FIG. 12, even if the pushed sealing member 15 escapes into the gap 56, it is possible to suppress curling up of the sealing member 15 due to uneven tightening. Thereby, it is possible to prevent the sealing member 15 from being caught between the contact portion 38 of the gland 20 and the opening end surface 21 of the socket 5.

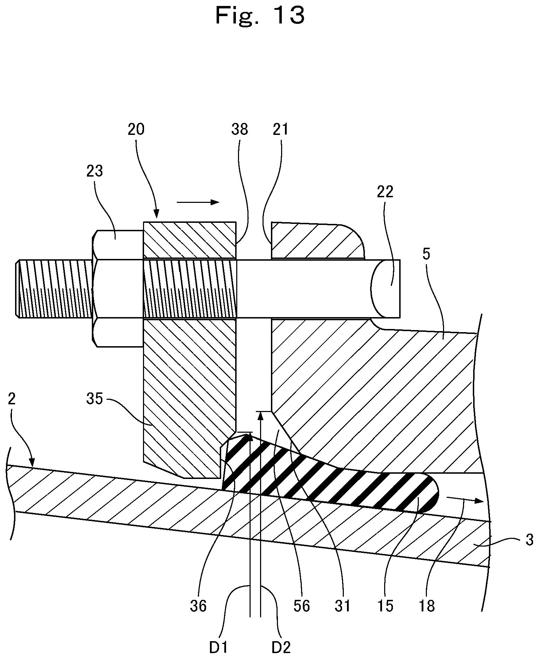

As a reference example, as shown in FIG. 13, when the dimensional relationship between the inner diameter D1 of the contact portion 38 and the diameter D2 of the end portion of the guiding surface 31 is reversed, that is, when the above described diameter D2 is larger than the above described inner diameter D1, the gap 56, which is formed between the sealing member 15 and the guiding surface 31 when the sealing member 15 is pushed into the insertion space 14 by the gland 20, will become larger.

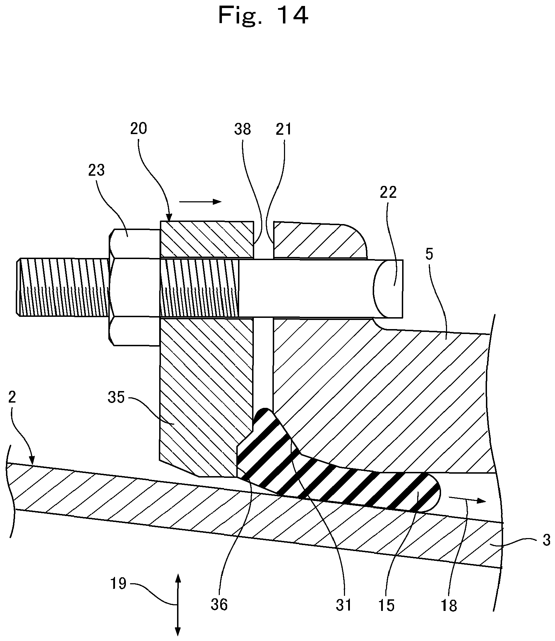

Therefore, when the T-head bolt 22 and the nut 23 are unevenly tightened upon connecting the gland 20 to the socket 5, as shown in FIG. 14, there is a risk that the pushed sealing member 15 escapes into the gap 56, and the sealing member 15 curls up so that the inner circumferential surface of the sealing member 15 departs from the outer circumferential surface of the spigot 3 in the radial direction 19. In this way, if the sealing member 15 has curled up, it becomes likely that the sealing member 15 is disadvantageously caught between the contact portion 38 of the gland 20 and the opening end surface 21 of the socket 5.

### (Second Embodiment)

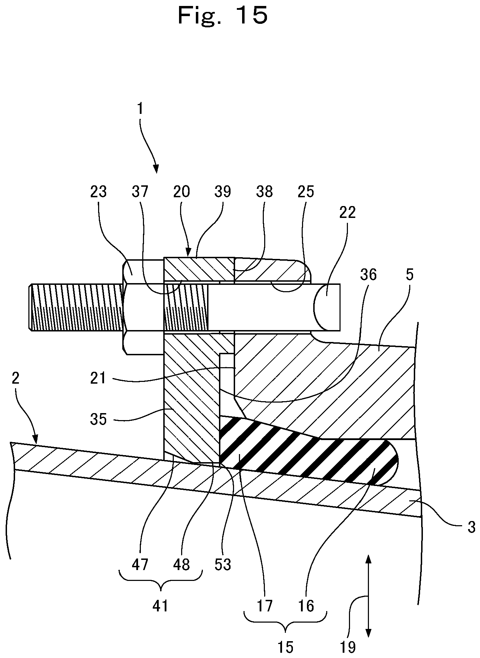

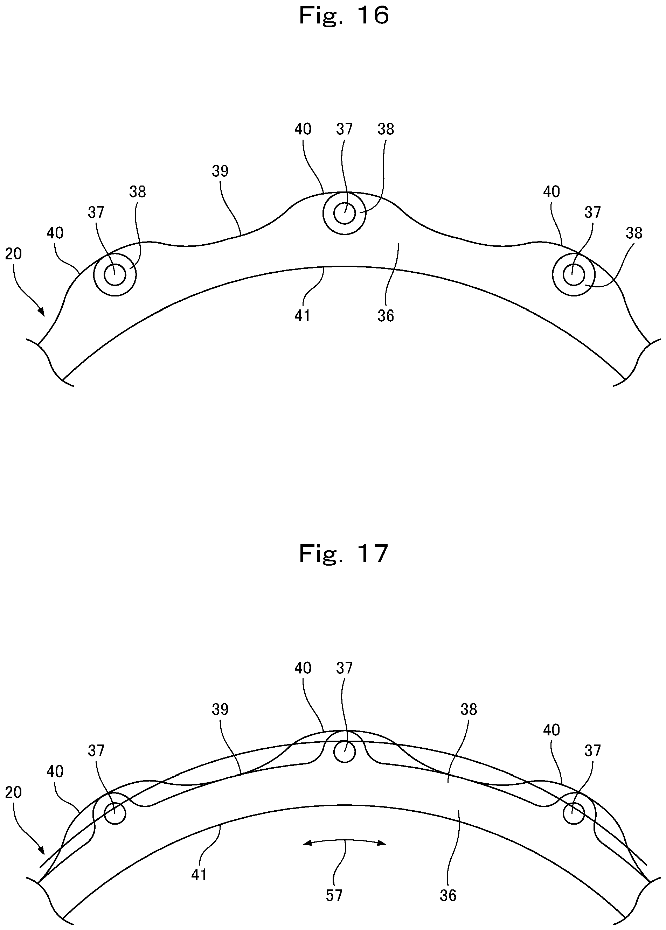

In a second embodiment, as shown in FIGS. 15 and 16, a plurality of annular contact portions 38 surrounding the circumference of each bolt insertion hole 37 are formed in the gland 20.

As a result of the contact portion 38 coming into contact with the opening end surface 21 of the socket 5, the interval from the pressing surface 36 to the opening end surface 21 of the socket 5 is kept at a predetermined interval. Accordingly, even if the T-head bolt 22 and the nut 23 are overly tightened and an excessive tightening force is applied to the gland 20, it is possible to prevent the gland 20 from being deformed in the circumference of the bolt insertion hole 37.

### (Third Embodiment)

In a third embodiment, as shown in FIG. 17, the contact portion 38 is formed in an annular shape surrounding the circumference of each bolt insertion hole 37 and is also formed in a region between a bolt insertion hole 37 and its adjacent bolt insertion hole 37 in the circumferential direction 57.

Accordingly, even if the T-head bolt 22 and the nut 23 are overly tightened and an excessive tightening force is applied to the gland 20, it is possible to prevent the gland 20 from being deformed in a region between a bolt insertion hole 37 and its adjacent bolt insertion hole 37.

### (Fourth Embodiment)

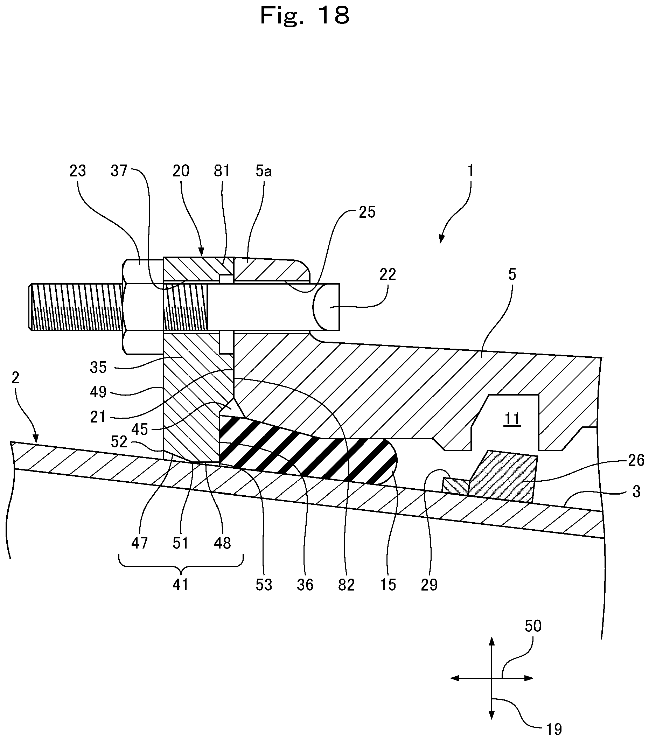

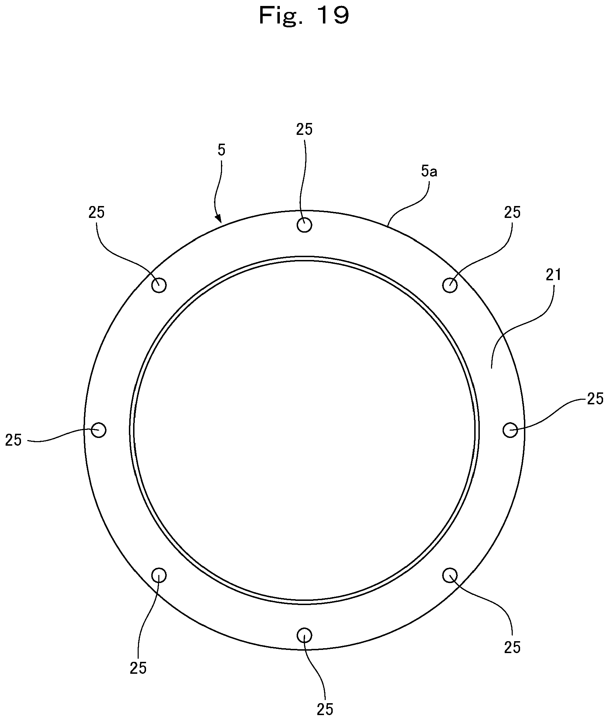

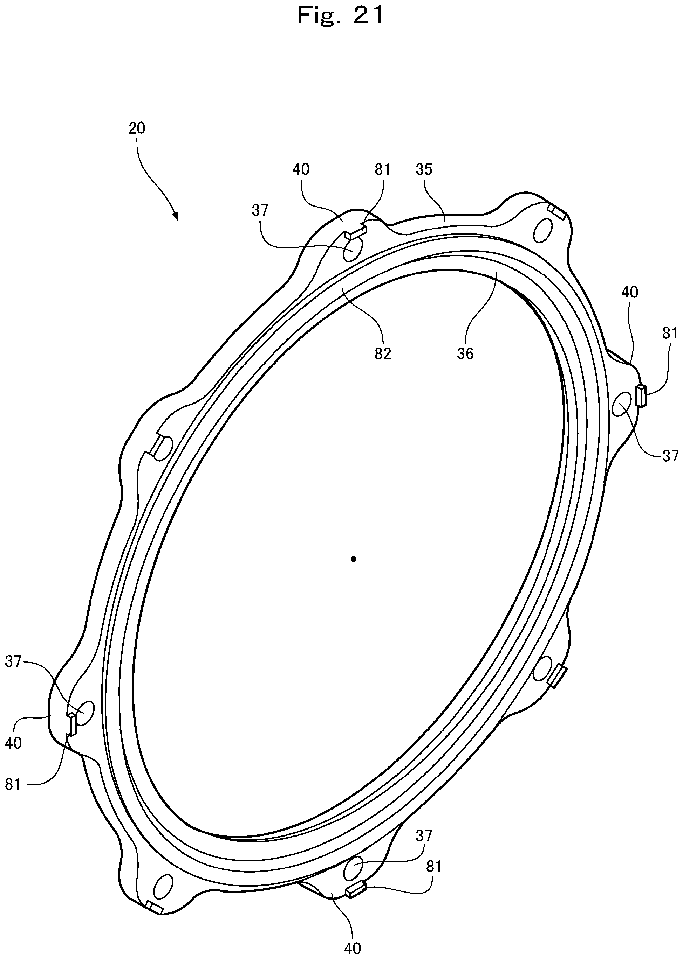

Hereafter, a fourth embodiment will be described based on FIGS. 18 to 23. As shown in FIG. 18, the socket 5 has a flange portion 5a at its tip end. A plurality of bolt holes 25 are formed in the flange portion 5a. For example, in FIG. 19, eight bolt holes 25 are formed to be distributed at equal angles in the flange portion 5a.

The gland 20 has an annular body portion 35, a pressing surface 36 that presses the sealing member 15, a plurality of (for example, eight) bolt insertion holes 37 through each of which the T-head bolt 22 is inserted, and a first contact portion 81 and a second contact portion 82 which are in contact with the opening end surface 21 of the socket 5.

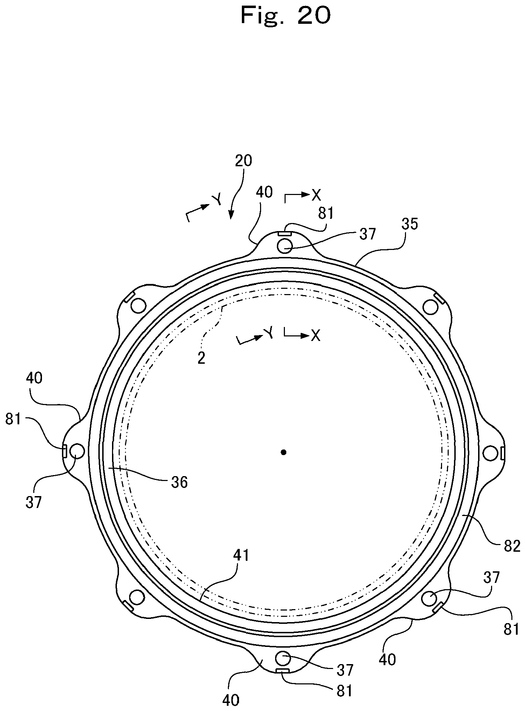

As shown in FIGS. 20 to 23, a first contact portion 81, which is provided in a plural number in the gland 20, is a projecting portion located on the outer side of each bolt insertion hole 37 in the radial direction 19 of the gland 20.

A second contact portion 82 is a projecting portion located on an inner side of each bolt insertion hole 37 in the radial direction 19 of the gland 20 and formed in an annular shape surrounding the circumference of the pressing surface 36. A recessed portion 43, into which the base portion 17 (end portion) of the sealing member 15 can be fitted, is formed on the inner side of the second contact portion 82 in the radial direction 19.

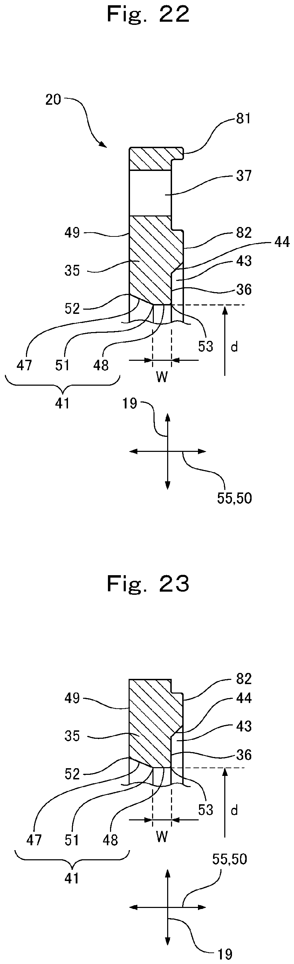

Accordingly, as shown in FIG. 18, as a result of the first contact portion 81 and the second contact portion 82 of the gland 20 coming into contact with the opening end surface 21 of the socket 5, the interval from the pressing surface 36 to the opening end surface 21 of the socket 5 is kept at a predetermined interval. Moreover, since the end portion of the sealing member 15 is fitted into the recessed portion 43 (see FIGS. 22, 23) of the gland 20 when the gland 20 pushes the sealing member 15 into the insertion space 14, the end portion of the sealing member 15 is fixed to the gland 20 without being displaced in the radial direction 19. Thereby, it is possible to reliably insert the sealing member 15 into the insertion space 14.

### (Fifth Embodiment)

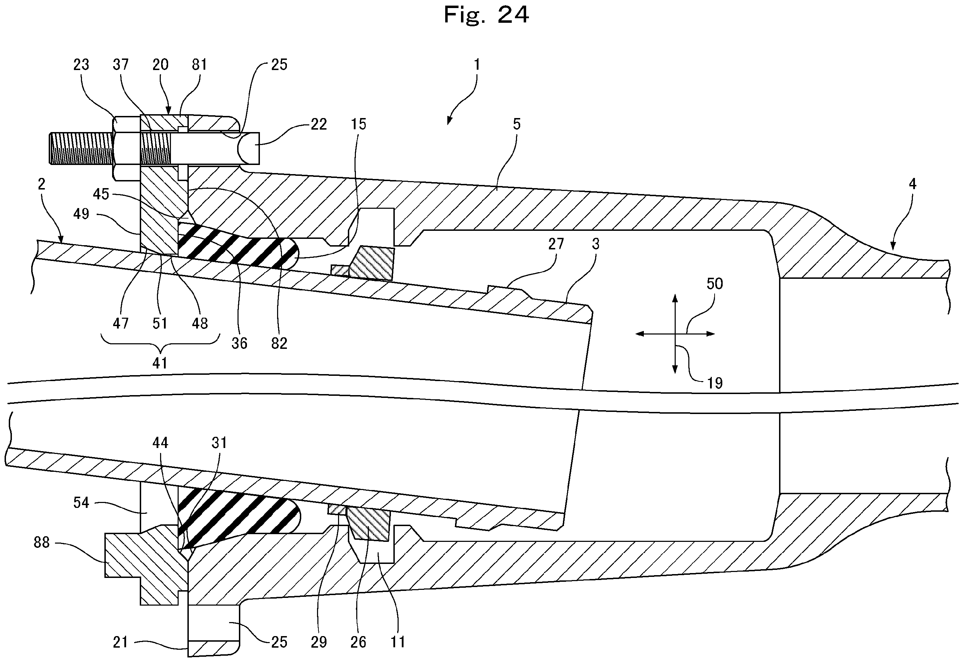

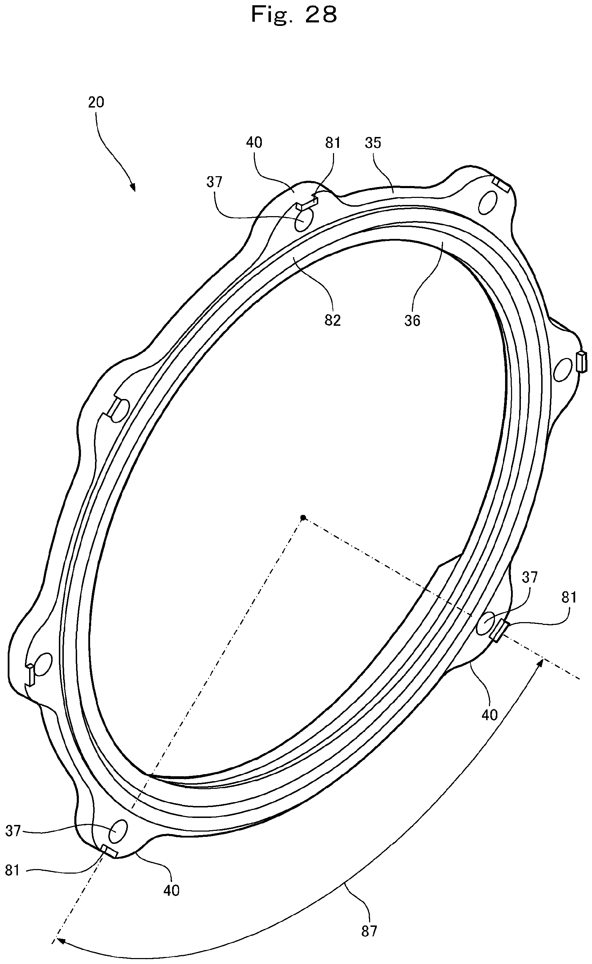

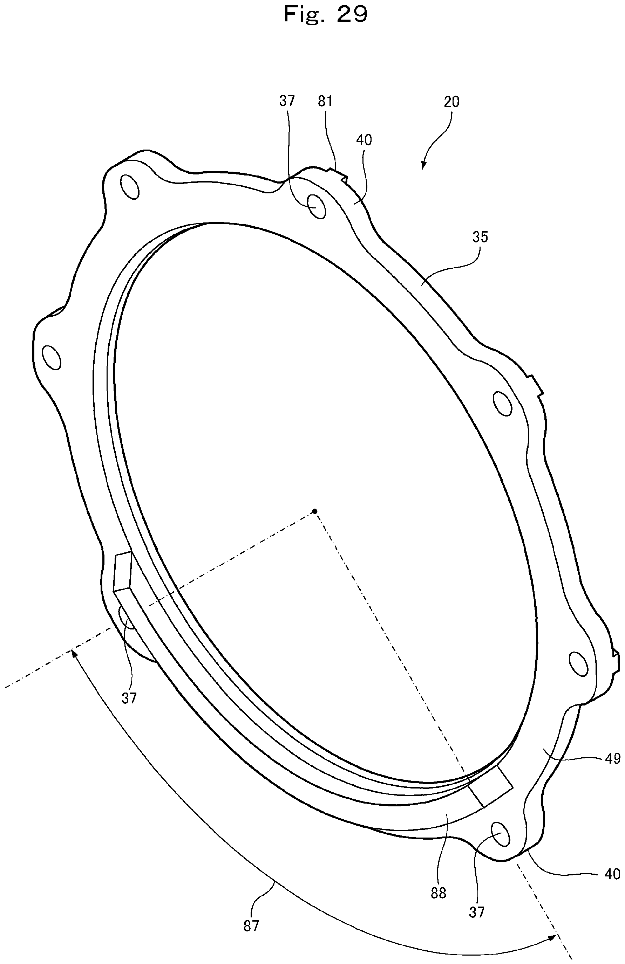

Hereafter, a fifth embodiment will be described based on FIGS. 24 to 30. The gland 20 has an equal interval region 86 and an enlarged interval region 87. In the equal interval region 86, the interval between the bolt insertion holes 37 in the circumferential direction is kept at an equal interval S1. In the enlarged interval region 87, the interval S2 between any adjacent two bolt insertion holes 37 is enlarged than the above described equal interval S1.

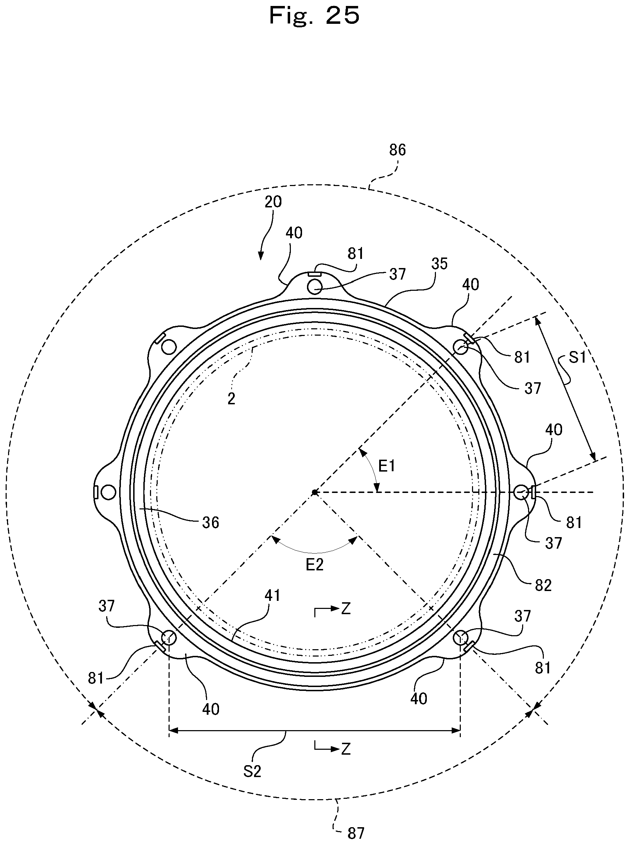

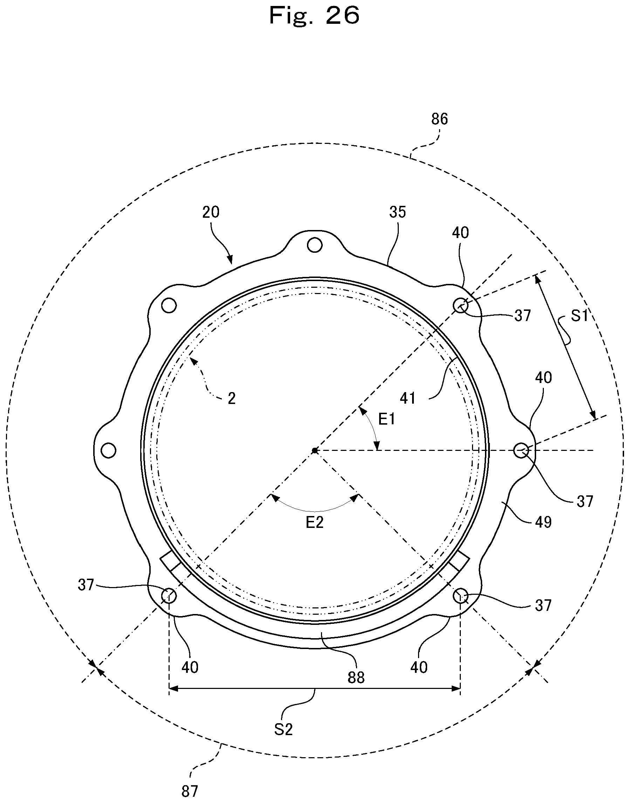

For example, in FIGS. 25 and 26, seven bolt insertion holes 37, which are one less than the number (eight, see FIG. 19) of the bolt holes 25 of the flange portion 5a of the socket 5, are formed in the gland 20. A distribution angle E1 of each bolt insertion hole 37 in the equal interval region 86 is 45°. A distribution angle E2 of both bolt insertion holes 37 in the enlarged interval region 87 is 90°.

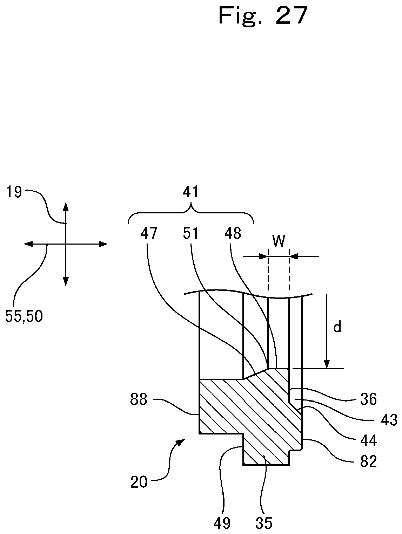

An arc-shaped reinforcing member 88 is provided on a surface 49 opposite the pressing surface 36 of the gland 20. The reinforcing member 88 is provided between two adjacent bolt insertion holes 37 in the enlarged interval region 87. As shown in FIG. 27, the reinforcing member 88 is located on an outer side of the inner circumferential surface 48 of the gland 20 in the radial direction 19.

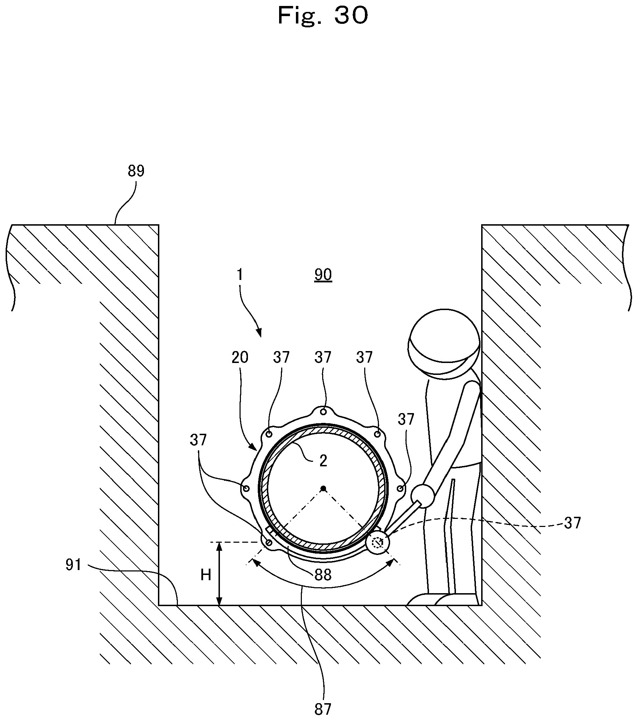

As shown in FIGS. 24 to 26, the gland 20 is connected to the socket 5 such that the enlarged interval region 87 is located directly below the first pipe 2. As shown in FIG. 30, the pipes 2 and 4 are joined inside a groove 90, which is formed by excavating the ground 89, and in this case, the bottom portion 91 of the groove 90 becomes an obstacle that hinders the joining work of the pipes 2 and 4. That is, the gland 20 is connected to the socket 5 with a plurality of T-head bolts 22 and nuts 23 with the enlarged interval region 87 facing the bottom portion 91 of the groove 90.

Hereafter, actions in the above described configuration will be described.

As shown in FIGS. 25, 26, and 30, since the enlarged interval region 87 of the gland 20 is located directly below the first pipe 2, the bolt insertion hole 37 of the enlarged interval region 87 is not directly below the first pipe 2, but is in a position which is distributed in the circumferential direction 57 of the gland 20 from directly below the first pipe 2. Thereby, since a vertical interval H between the bolt insertion hole 37 of the enlarged interval region 87 and the bottom portion 91 of the groove 90 becomes large, it is possible to improve the workability when joining pipes 2 and 4, even if the working space between the gland 20 and the bottom portion 91 of the groove 90 is small.

Moreover, since the enlarged interval region 87 of the gland 20 is maintained sufficiently rigid by the reinforcing member 88, even if a reaction force of the sealing member 15 acts on the gland 20, it is possible to prevent the enlarged interval region 87 of the gland 20 from being deflected by the reaction force. Further, when the T-head bolt 22 is inserted into the bolt insertion hole 37 of the enlarged interval region 87 of the gland 20 and the bolt hole 25 of the socket 5, and is tightened with the nut 23, even if high stress is generated between two bolt insertion holes 37 in the enlarged interval region 87, it is possible to prevent the enlarged interval region 87 from being deformed or damaged.

In the above described fifth embodiment, as shown in FIGS. 25 and 26, seven bolt insertion holes 37 are formed in the gland 20, but are not limited to seven. For example, the bolt insertion holes 37 of the gland 20, which has 12 bolt insertion holes 37 shown as the first embodiment in FIGS. 5 and 6, may be reduced by one to form 11 bolt insertion holes 37 in the gland 20.

In the above described first to fifth embodiments, as shown in FIGS. 1 and 24, although a pipe joint 1 in which the spigot 3 is connected to the socket 5 with the spigot being inclined with respect to the socket 5, is shown, the pipe joint 1 may be one in which the socket 5 is connected to the spigot 3 with the socket 5 being inclined with respect to the spigot 3. Moreover, the gland 20 shown in the above described first to fifth embodiments may be used for a pipe joint in which the spigot 3 and the socket 5 are joined in a straight line without being inclined.

In the above described first to fifth embodiments, although a tapered surface 47 and an inner circumferential surface 48 are formed in the inner circumference 41 of the gland 20, only the tapered surface 47 may be formed without forming the inner circumferential surface 48.

In the above described first to fourth embodiments, although all the intervals between the bolt insertion holes 37 of the gland 20 are kept at an equal interval, the gland 20 of the above described first to fourth embodiments may be replaced with the gland 20 having the equal interval region 86 and the enlarged interval region 87 shown in FIGS. 25 and 26 of the above described fifth embodiment.

## Claims

1. A gland provided in a pipe joint, wherein a spigot is inserted into a socket, a sealing member is inserted between an outer circumference of the spigot and an inner circumference of the socket, the gland is arranged along an outer circumference of the spigot so as to face an opening end surface of the socket from an outer side, and the gland is connected to the socket by a plurality of fasteners to push the sealing member into a deeper side of the socket,
the gland comprising
a pressing surface that presses the sealing member,
a plurality of insertion holes in which each fastener is inserted through each insertion hole,
a contact portion that is brought into contact with the opening end surface of the socket, and
a tapered surface formed on an inner circumference of the gland,
wherein the tapered surface has a diameter expanded from a side closer to the pressing surface to an opposite side farther away from the pressing surface.

2. The gland according to claim 1, further comprising an inner circumferential surface formed in the inner circumference of the gland,
wherein the inner circumferential surface has a constant inner diameter and is located on a side closer to the pressing surface than to the tapered surface.

3. The gland according to claim 1 or 2, wherein the contact portion is provided to surround at least a circumference of each insertion hole.

4. The gland according to claim 3, wherein the contact portion is provided in a region from the circumference of the pressing surface to an outer circumferential edge of the gland in the radial direction, excepting the insertion holes.

5. The gland according to claim 1 or 2, wherein
the contact portion has a first contact portion and a second contact portion,
the first contact portion is a projecting portion located on an outer side of the insertion hole in the radial direction,
the second contact portion is a projecting portion located on an inner side of the insertion hole in the radial direction and formed to surround the circumference of the pressing surface, and
a recessed portion into which an end portion of the sealing member is able to fit is formed on an inner side of the second contact portion in the radial direction.

6. A pipe joint comprising the gland according to claim 1, wherein
a sealing surface having a diameter gradually reduced toward a deeper side of the socket is formed in the inner circumference of the socket,
an insertion space is formed over an entire circumference between the sealing surface and the outer circumference of the spigot,
the sealing member is inserted into the insertion space,
the sealing member has a bulb portion at an end portion in an insertion direction, the bulb portion being compressed in the pipe radial direction to exhibit a sealing function,
a guiding surface that guides the bulb portion of the sealing member from the opening end surface of the socket to the insertion space is formed in the inner circumference of the socket,
the guiding surface is a tapered surface having a diameter gradually reduced toward a deeper side of the socket and is formed between the opening end surface of the socket and the sealing surface in the pipe axis direction, and
the inclination angle of the guiding surface with respect to the pipe axis is larger than the inclination angle of the sealing surface with respect to the pipe axis.

7. The pipe joint according to claim 6, wherein
the insertion hole of the gland is located on an outer side of the pressing surface in the radial direction of a gland body,
the contact portion of the gland is provided in a region from the circumference of the pressing surface to an outer circumferential edge of the gland in the radial direction of the gland body excepting the insertion holes,
the pressing surface is formed in a recessed portion surrounded by the contact portion, and
the end portion of the sealing member is fitted into the recessed portion of the gland.

8. The pipe joint according to claim 7, wherein a gap is formed, in which the gap is surrounded by an inner circumferential surface of the contact portion of the gland, a guiding surface of the socket, and an outer circumferential surface of the sealing member.

9. The pipe joint according to claim 8, wherein
the diameter of the end portion of the guiding surface on a side of the opening end surface of the socket is smaller than the inner diameter of the contact portion of the gland.

10. The pipe joint according to any one of claims 6 to 9, wherein
the pipe axis of either one of the spigot and the socket is inclined with respect to the pipe axis of the other with the spigot being inserted into the socket,
the sealing member is inserted between the outer circumference of the spigot and the inner circumference of the socket,
the gland is arranged along an outer circumference of the spigot so as to face the opening end surface of the socket from an outer side, and is connected to the socket with a plurality of fasteners;
the pressing surface of the gland abuts on the sealing member, and
the fasteners are inserted through the insertion holes of the gland.

11. A method for joining pipes by using the gland according to claim 1, comprising
inserting the spigot into the socket with one pipe axis of either one of the spigot and the socket being inclined with respect to the other pipe axis, and
connecting the gland to the socket and inserting the sealing member between the outer circumference of the spigot and the inner circumference of the socket by inserting and tightening the fastener into the insertion hole of the gland.
